# EUROPEAN PATENT SPECIFICATION

(11) **EP 1 545 851 B1**
(45) Date of publication and mention of the grant of the patent: **04.02.2009**
(21) Application number: 03785261.3
(22) Date of filing: 12.08.2003
(51) Int. Cl.: B29C 31/00, B29C 37/00

(54) **METHOD OF FORMING A COMPOSITE ARTICLE WITH A TEXTURED SURFACE**
VERFAHREN ZUR HERSTELLUNG EINES VERBUNDARTIKELS MIT STRUKTURIERTER OBERFLÄCHE
PROCEDE DE FABRICATION D'UN ARTICLE COMPOSITE A SURFACE TEXTUREE

(30) Priority: 12.08.2002 US 402673 P
(43) Date of publication of application: 29.06.2005
(73) Proprietor: GENERAL MOTORS CORPORATION, Detroit, Michigan 48265-3000 (US)
(72) Inventor: KIA, Hamid, G., Bloomfield Hills, MI 48302 (US); KIA, Sheila, F., Bloomfield Hills, MI 48302 (US)
(74) Representative: Manitz, Finsterwald & Partner GbR
(86) International application number: PCT/US2003/025357
(87) International publication number: WO 2004/014627

(56) References cited:
- EP-A- 1 162 049
- US-A- 1 991 996
- US-A- 2 085 875
- US-A- 2 234 237
- US-A- 3 775 240
- US-A- 3 835 608
- US-A- 4 078 348
- US-A- 4 105 816
- US-A- 4 956 200
- US-A- 5 215 699
- US-A- 5 690 759
- PATENT ABSTRACTS OF JAPAN vol. 010, no. 204 (M-499), 17 July 1986 (1986-07-17) & JP 61 044625 A (HITACHI CHEM CO LTD), 4 March 1986 (1986-03-04)

## Description

### FIELD OF THE INVENTION

The present invention generally relates to a method for producing textured composite articles. More particularly, this invention relates to a method by which a textured surface is produced on a composite article through the use of a removable textured coating layer that is applied to the mold in which the article is subsequently formed and then physically deformed in the mold so as to produce a textured surface on the composite article.

### BACKGROUND OF THE INVENTION

Open tool molding is a process for producing relatively low cost composite panels at low volumes. While steel molds are often used for other molding operations, the open tool molding process was developed to use less expensive one-sided epoxy or polyester molds to produce various products, such as recreational vehicle (RV) composite panels with an in-mold finish. In this process, the mold surface is cleaned and waxed, after which a layer of gel coat is applied and then partially cured. A laminate is then applied to the gel coat layer, and the laminate and gel coat are cured to form a unitary part having a surface that is defined by the cured gel coat. Molded parts can be produced by this method to have a class A finish bearing any desired color originally carried by the gel coat.

While the use of a low-cost epoxy or polyester mold offers significant cost advantages over other molding methods used to produce composite articles, there are certain limitations imposed by a polymeric mold. One such example is the molding of panels, such as automotive interior panels, for which a textured finish, such as a leather grain look, is desired. Most typically in the past, plastic textured panels have been made by either injection molding or compression molding using steel molds. A grained profile is formed on the surface of the steel mold during the tool making process. The grained surface profile is then transferred onto the surface of the molded parts, creating a textured surface finish. Because of the hardness of the steel molds, the grained surfaces maintain their appearance for many years of production. In contrast, polymeric molds do not have the same level of hardness and, therefore, a grained surface created on a polymeric mold wears out quickly. The vertical walls of a grained polymeric mold are particularly vulnerable to wear during demolding, with the result that an uneven surface finish is produced after molding only a few parts. Consequently, polymeric open tool molds have been generally limited to molding articles with smooth, glossy surfaces.

Alternatively, the composite articles can be given a textured finish by a molding process that uses an interfacial layer to isolate the surface of the mold from the surface of a composite article produced with the mold. According to that approach, a solution can be sprayed on the mold surface to form the interfacial layer, whose surface opposite the surface is textured during the spraying process. The texture of the interfacial layer is then transferred to the surface of the composite article produced with the mold. After demolding, the interfacial layer is removed from the article to expose an underlying textured surface of the article. While this approach works well, the textured surface of the sprayed interfacial layer must also be closely controlled to produce a high quality surface finish on the article. In addition, the availability of patterns may be limited by the spraying process. Such an example can be found in commonly-assigned EP 1 162 049 A2, entitled "Method of Forming a Composite Article with a Textured Surface".

[0004a] US 2,085,875 discloses a method of making a decorative coating including forming an irregular relief in a sprayed on, metal enamel coating.

In view of the above, it is the object of the invention to provide a method for producing composite articles with a textured finish using a simplified approach that offers a wide variety of textured surface designs.

### SUMMARY OF THE INVENTION

[0005a] This object is achieved through the characterizing features of the independent claims.

In one embodiment of the present invention, the method of molding a composite article with a textured surface generally entails spraying a coating layer on the mold, physically deforming the surface of the coating layer facing away from the mold to form a textured surface, and applying a composite material over the textured coating surface such that the composite material adjacent the textured coating substantially conforms to the shape of the textured coating surface to form a textured article surface. In accordance with an embodiment of the invention, the composite material is a gel coat material from which a coating may be removed after demolding to reveal a textured surface layer of a composite article. Preferably in accordance with this invention, the coating layer is manually textured by some sort of physical deformation prior to application of the gel coat layer. The coating layer can be manually textured by any sort of physical manipulation or deformation either by hand or with the help of a machine, such as by rolling a brush with a pattern, pressing a patterned surface against the coating, lightly stamping the coating layer, rolling with large mechanized rolls with patterns thereon, tapping with sponges, applying any kind of dots, patterns or pictures, brushing, pressing with a sheet or other object, dabbing, etc.

In accordance with other preferred aspects of the invention, the coating layer is formed of a polyvinyl acetate solution in water with the coating layer being about 5-10 mils thick.

After the composite article is removed from the mold, the coating layer has been sufficiently cured such that it can then be removed from the composite article, or left on the article as a temporary protective coating during shipping and handling and then later removed prior to or after the article is installed or assembled with other components.

In view of the above, a significant advantage of this invention is that an open tool mold can be fabricated to have smooth mold surfaces, with the manually textured coating layer being the means for producing a textured surface on an article produced with the mold. As a result, molds formed from lower cost and less durable materials, particularly polymers such as epoxies and polyesters, can be used to produce articles with textured surfaces, without quickly damaging or wearing out the mold surfaces. Also, the use of the manually manipulated coating layer offers more flexibility and options in the styling of the textured coating surface and thus the final textured article surface.

Other objects and advantages of this invention will be better appreciated from the following detailed description.

### BRIEF DESCRIPTION OF THE DRAWINGS

The present invention will become more fully understood from the detailed description and the accompanying drawings, wherein:

Figure 1 represents a cross-sectional view of an open tool mold for producing a composite article with a textured surface in accordance with a method according to the present invention;

Figure 2 represents a cross-sectional view showing the complete composite article with the coating layer pulled away from the textured article surface;

Figure 3 represents a break-away cross-sectional view of an open tool mold for producing a composite article in accordance with a method according to an alternative embodiment of the invention in which the article is not substantially flat;

Figure 4 shows a cross-sectional view of an open tool mold for producing a composite article in accordance with a method according to an alternate embodiment of the invention in which the composite article consists of the gel coat layer; and

Figure 5 shows a photograph of a sample article 112 made in accordance with a method according to the invention and showing the final textured gel coat layer of the article with the coating layer removed.

### DETAILED DESCRIPTION OF THE PREFERRED EMBODIMENTS

The following description of preferred embodiment(s) of the invention is merely exemplary in nature and is in no way intended to limit the invention, its application, or uses.

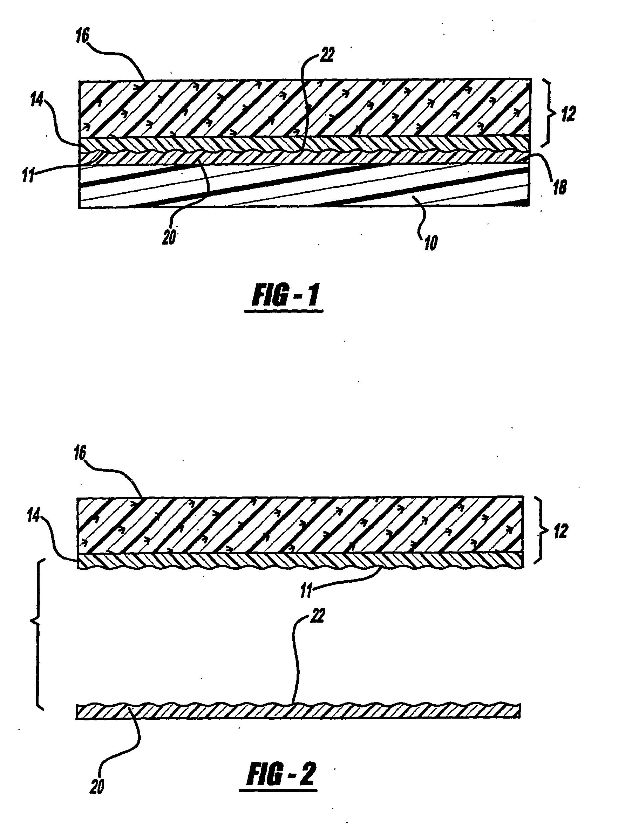

Illustrated in Figure 1 is a cross-section through a portion of an open tool mold 10 on which a composite article 12 is in the process of being cast. As is typical in the art, the article 12 is formed by depositing a gel coat layer 14, over which a fiber-reinforced laminate 16 is applied. Following complete curing in the mold 10, the gel coat layer 14 and laminate 16 form the unitary article 12 whose outer surface 11 is defined by the cured gel coat layer 14. Advantageously in accordance with the present invention, a coating layer 20 having a textured coating surface 22 is formed onto the mold surface 18, as described further below. As shown in Figure 2, the cured gel coat layer 14 takes the shape of the textured coating surface 22 and provides an outer textured article surface 11 of the article 12 which preferably provides a textured article surface that requires no additional processing or painting for finishing of the gel coat layer 14. Such a finish would be suitable show surface for automotive interior and exterior panels, shower and bathroom applications, marine and recreational vehicle applications, etc. that may employ this process.

Various compositions can be employed for the gel coat layer 14 and laminate 16. Because the gel coat layer 14 defines the textured article surface 11 of the article 12 after molding, the materials for the gel coat layer 14 and laminate 16 must be compatible. In one embodiment that achieved particularly desirable processing and wetting properties, the laminate 16 was formed by admixture of one-inch (about 25 mm) long glass fibers and a resin chemistry containing:

100 parts of an unsaturated polyester with a styrene monomer content of about 32%, available from Alpha/Owens-Corning under the name H834. The resin is a maleic anhydride-based unsaturated polyester modified with dicyclopentadiene, and contains a thixotrope and cobalt 2-ethylhexanoate as a promoter that reacts with methyl ethyl ketone peroxides (MEKP) to facilitate curing at room temperature. The resin has a specific gravity of about 1.100 g/cc and a Brookfield viscosity of about 670 cps using an RVF viscometer at 20 rpm with a #3 spindle.

0.81 parts of wetting and dispersing additive having a specific gravity of about 1.010 g/cc and available from BYK under the name W-972.

0.23 parts of a wetting and dispersing additive having a specific gravity of about 0.930 g/cc and available from BYK under the name R-605.

0.23 parts of a silicon-free air release additive available from BYK under the name A-555 to reduce foaming.

23 parts of a calcium carbonate (CaCO₃) powder with a particle size of about 5 micrometers.

1.23 parts of a fumed silica thixotrope available from Cab-O-Sil under the name TR-720; specific gravity of about 0.050 g/cc.

1.50 parts of a methyl ethyl ketone peroxide (MEKP) available from Elf Atochem NA under the name DDM-9; specific gravity of about 1.084 g/cc.

The gel coat layer 14 was a polyester-based material, and therefore chemically compatible with the laminate 16. Suitable thicknesses for the gel coat layer 14 and laminate 16 are about 0.5 mm and about 3 mm, respectively, though it is foreseeable that various thicknesses could be used. Because the outer textured surface 11 of the article 12 is defined by the cured gel coat layer 14, it is often desirable that the gel coat layer 14 contain pigmentation to produce a particular color desired for the article 12.

As shown in Figure 1, a coating layer 20 is sprayed, rolled, poured, or otherwise deposited on the mold surface 18. As shown in Figure 1, the coating layer is ultimately positioned between the mold surface 18 and the article 12. The surface 18 of the mold 10 is preferably smooth while the exposed coating surface 22 of the coating layer 20 opposite the mold 10 is textured by physical manipulation as described further hereinafter. Accordingly, the textured coating surface 22 of the coating layer 20 defines the molding surface to the article 12, such that the surface 18 of the mold 10 is not subject to damage and wear during the process of removing the article 12 from the mold 10. Therefore, a particular feature of this invention is that the mold 10 can be formed from materials that are far less durable wear-resistant than steel, including polymers such as epoxies and polyesters. However, it is foreseeable that the advantage of this invention could be realized with other types of mold tooling and other mold materials.

The coating layer 20 is sprayed, cast, rolled, poured or otherwise applied onto the mold 10 and is then allowed to partially dry or cure if necessary to reach a physical state where it can easily be manually, physically manipulated or deformed to provide a textured surface 22. Preferably, the coating layer 20 is manually textured by some sort of physical manipulation or deformation prior to application of the gel coat layer 14. The coating layer 20 can be manually textured by physical manipulation or deformation either by hand or with the help of a machine, such as by rolling a brush with a pattern, pressing a patterned surface against the coating, lightly stamping the coating layer, rolling with large mechanized rolls with patterns thereon, tapping with sponges, applying any kind of dots, patterns or pictures, brushing, pressing with a sheet or other object, dabbing, etc. In one embodiment, the coating layer may be applied and the physical deformation can be accomplished in a single step, for example by using an application technique that results in a coating layer having the physical deformation. For example, special rollers or sponges may be used that have a predesigned texture, such that the texture is transferred to the coating layer upon application. Advantageously, the type of physical deformation and the style or pattern of the textured surface are almost unlimited that can be applied by this process. Also advantageously, the coating layer 20 can be physically manipulated over a rather large time window of about 30-50 minutes after sufficient drying has occurred, but prior to being too dry to easily physically manipulate.

The coating layer 20 may be made by applying a film forming coating composition, typically containing polymeric components. In such film forming compositions, a film is generally formed after application upon evaporation of the solvent or dispersion medium. For example, a latex composition coalesces as the particles of polymer come closer together as the dispersing medium evaporates. If the polymer particles of the latex are soft enough the particles may coalesce to form a film. In general, any film forming coating systems may be used, which are well-known in the art. Non-limiting examples include oils and oleoresinous binders, phenolic resins, alkyd resins, polyesters, amino resins, fatty polyamides, urethane polymers, silicone resins, cellulose esters and ethers, vinylchloride and vinylacetate polymers, and acrylic and methacrylic ester polymers.

A wide variety of solvents including water may be used for the film forming composition. Because of environmental and health concerns, it is preferred to use water as the solvent or dispersed phase of the film forming compositions. Coating compositions in which at least about 80% of the liquid is water are classified as aqueous systems. Aqueous water borne systems that may be used to practice the invention include those in which the binders are soluble in water, those in which the binder is colloidally dispersed, and those in which the binder is emulsified in the form of a latex. Solutions are single phase materials, whereas the colloidal dispersions and emulsions consist of at least two phases. Solutions are further distinguished over the other two forms of film forming compositions by the fact that do not settle out during storage, whereas the colloidal dispersions and emulsions tend to settle out due to gravity. Typical water soluble binders have molecular weights ranging from about 5000 to about 10000. Polymers that can be colloidally dispersed to form an emulsion in water typically have a molecular weight range on the order of about 10000 to about 50,000. Latex systems are generally prepared by emulsion polymerization. The molecular weights of polymers and latex and lattices can range up to a million and higher.

The film forming compositions are well known and are commercially available. The film forming compositions are usually applied in the form of the polymeric binder and solvent, generally without the need for further additives. Although additional additives such as antioxidants or other stabilizers may be added, these are generally not required because the coating layer is meant to be a temporary layer on the composites of the invention.

Although the coating compositions may be chosen from a wide variety of materials, it is preferred to choose materials that have a low amount or a minimal amount of intercoat adhesions to the gel coat layer which is to be applied after the coating layer into the mold. If the adhesion between the coating layer and the gel coat is unacceptably high, a layer of a release agent may be applied over the coating layer in the mold before application of the gel coat. A preferred composition is the general class of acrylic and methacrylic ester polymers. These may be provided in the form of latexes, produced by emulsion polymerization, or may be produced by dispersing the bulk polymer in an aqueous medium. Acrylic latices and emulsions are well-known in the coatings industry.

According to one embodiment of the invention, the coating layer 20 is made by applying a thin layer of polyvinyl acetate solution in water (containing for example, about 20% by weight polyvinyl acetate). Other suitable film forming solutions and emulsions, such as acrylic emulsions may be used. A preferred thickness of the dried coating layer is about 5-10 mils (about 0.0125 to 0.025 cm). While this thickness is not critical, the coating layer 20 should have sufficient thickness for withstanding the physical manipulation and any handling during removal from article 12, yet be thin enough to conform to the shape of the mold 10 and to quickly dry for application of the gel coat layer 14.

The steps generally entailed in producing the composite article 12 in accordance with Figure 1 are to first clean and then optionally deposit a suitable mold release agent on the surface 18 of the mold 10. The coating layer 20 is then deposited onto the mold surface 18 in any suitable manner, such as by spraying, and then partially dried. For the next 30-50 minutes or so, the coating layer 20 may then be physically deformed by any suitable mechanical or manual manipulation, such as brushing, rolling, stamping, pressing, etc., such that a textured coating surface 22 is formed opposite the mold surface 18.

Optionally, a second layer of a suitable mold release agent may be applied to the textured coating surface 22 of the coating layer 20 prior to forming the gel coat layer in order to facilitate later removal of the coating layer 20 from article 12. The gel coat layer 14 is then deposited over the textured coating surface 22 of the coating layer 20 in a suitable manner, such as spraying. As the gel coat layer 14 cures, it conforms to and takes the shape of the textured coating surface 22 to create an outer textured article surface 11. The gel coat layer 14 may preferably be partially cured prior to application of the laminate 16. The coating layer 20, gel coat layer 14 and laminate 16 are then fully cured before demolding, yielding the article 12 having a textured article surface 11 defined in the gel coat layer 14 and covered by the coating layer 20.

The coating layer 20 provides a protective coating over the outer textured article surface 11 which can be removed immediately upon demolding or which can be removed after the article 12 has reached a destination where the protective coating layer 20 is no longer desired.

It will be appreciated that the coating layer 20 preferably covers a substantial portion of the mold surface 18 such that a substantial portion of the article surface 11 will be textured when the curing process is complete. Advantageously, all of the article 12 can be easily textured using this process. However, it is contemplated that there could be cases in which the entire mold surface 18 would not be covered with the coating layer 20, for instance in the case of a very large article or an article for which only localized texturing is desired.

Advantageously, by physically deforming the coating layer 20 while it is in the mold 10, it will be appreciated that the article 12 could be formed with selective textured and smooth surface areas or with different textured surfaces depending on the contour of the area of the textured coating surface 22 that is provided for the gel coat layer 14 to form over.

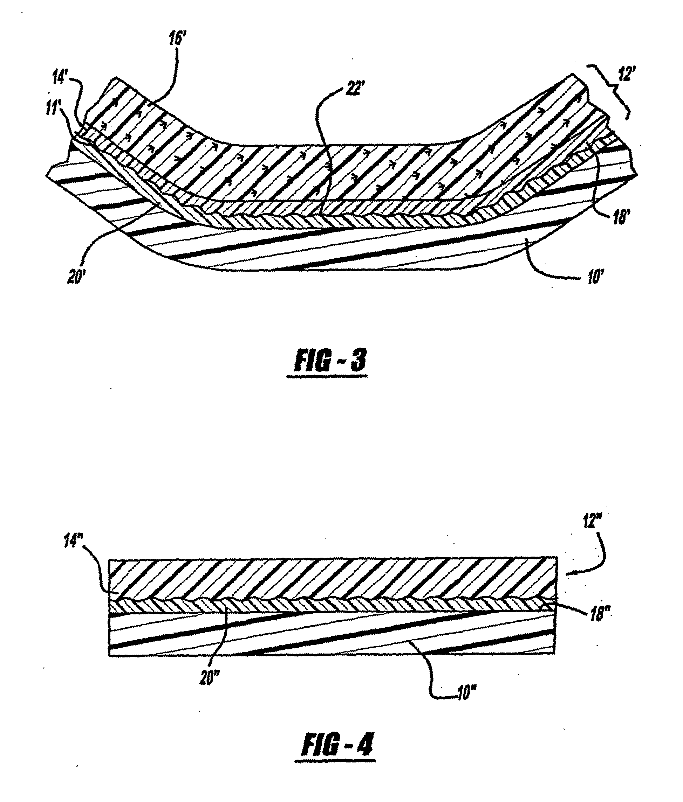

As shown in Figure 2, the article 12 is preferably a generally planar composite article 12 such as is desirable for use as an automotive panel. However, as shown in the alternate embodiment of Figure 3, it will be appreciated that the article 12' could also be a curved article 12' in accordance with this invention. The article 12' can take many shapes as long as the coating layer 20' can be evenly deposited onto the mold surface 18' and physically manipulated within the mold 10. For example, a stamp, press, or brush could be made of a mating shape to conform to the contour of the coating layer 20' for applying the physical deformation required for the textured surface 22'.

It will be appreciated that the composite article could have additional layers or that the gel coat layer could be the only layer that makes up the composite article. For example, Figures 4 shows a composite article with similar reference numerals as described above having similar descriptions. However, the gel coat layer 14" is the only layer of the composite article 12". This process could be used for decorative applications that don't require the strength of the laminate and the thickened gel coat layer 14" could provide the structural strength. For example, the gel coat layer 14" could be given a thickness of about 0.5 mm to about 5mm.

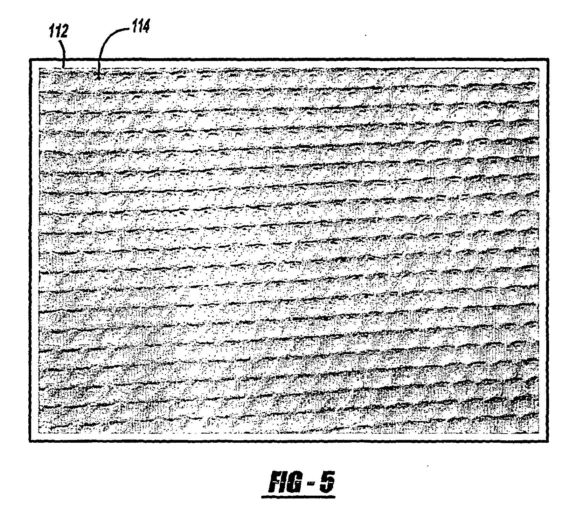

Referring to Figure 5, a sample article 112 is shown that has been made by the above-described methods showing and showing the final textured gel coat layer 114 of the article with the coating layer removed.

From the above, it can be seen that a significant advantage of the present invention is that a removable textured coating layer can be employed as an alternative means for generating a textured finish on the surface of a composite article produced with an open tool molding process. As a result, the invention overcomes the prior requirement for using an expensive textured steel mold to produce textured composite articles. Instead, less durable mold materials can be used to form molds with untextured (i.e., smooth) mold surfaces, which are then coated with the textured interfacial layer of this invention to impart the desired textured surface to the composite articles. Also advantageously, this invention can easily be applied to molds of various shapes and sizes and can be textured in a wide variety of patterns.

While certain embodiments of this invention have been described above, the invention is not intended to be limited thereby, but it is intended to be interpreted broadly within the scope of the following claims.

## Claims

1. A method of producing a composite article (12) with a textured surface (11), the method comprising the steps of:
providing a mold (10) having a mold surface (18);
depositing a coating layer (20) on the mold surface (18), and
applying a composite material (14) on a textured coating surface (22) such that the composite material (14) adjacent the textured coating surface (22) substantially conforms to and takes the shape of the textured coating surface (22) to form the textured surface (11),
**characterized by**
physically deforming the coating layer (20) opposite the mold surface (18) to form the textured coating surface (22).

2. A method according to claim 1, wherein the coating layer (20) is physically deformed by a method selected from the group consisting of: brushing, rolling, stamping, pressure, dabbing, and sponging.

3. A method according to claim 1 comprising partially curing the coating layer (20) before physically deforming the coating layer (20).

4. A method according to claim 1, wherein depositing the coating layer (20) comprises applying an acrylic polymer latex onto the mold surface (18).

5. A method according to claim 1, wherein depositing the coating layer (20) comprises applying a solution of polyvinyl acetate onto the mold surface (18).

6. A method according to claim 1, wherein the mold (10) is an open tool mold.

7. A method according to claim 6, wherein the open tool mold is formed from a polymer material.

8. A method according to claim 1, wherein applying the composite material (14) comprises applying a gel coat onto the textured coating (22), and applying a fiber reinforced laminate layer (16) onto the gel coat.

9. A method according to claim 8, comprising partially curing the gel coat before applying the laminate.

10. A method according to claim 1, wherein the composite is completely cured before being removed from the mold (10).

11. A method according to claim 1, wherein the composite article (12) is an automotive panel.

12. A method according to claim 8, wherein the gel coat is applied to a thickness of 0.5 mm to 5 mm.

13. A method according to claim 8, wherein the gel coat comprises a pigment.

14. A method according to claim 8, wherein the laminate layer comprises glass fibers and an unsaturated polyester resin.

15. A method according to claim 14, wherein the gel coat comprises a polyester resin.

16. A method according to claim 8, wherein depositing the coating layer (20) comprises applying an acrylic polymer latex onto the mold surface (18).

17. A method according to claim 8, wherein depositing the coating layer (20) comprises spraying a solution of polyvinyl acetate in water onto the mold surface (18).

18. A method according to claim 8, wherein the composite article (12) is an automotive panel.

## Patentansprüche

1. Verfahren zur Herstellung eines Verbundgegenstandes (12) mit einer strukturierten Oberfläche (11), wobei das Verfahren die Schritte umfasst, dass:
eine Form (10) mit einer Formfläche (18) bereitgestellt wird;
eine Beschichtungsschicht (20) auf der Formfläche (18) abgeschieden wird, und
ein Verbundmaterial (14) auf eine strukturierte Beschichtungsfläche (22) aufgetragen wird, so dass das Verbundmaterial (14) benachbart der strukturierten Beschichtungsfläche (22) im Wesentlichen mit der Form der strukturierten Beschichtungsfläche (22) übereinstimmt und diese annimmt, um die strukturierte Fläche (11) zu bilden,
**dadurch gekennzeichnet, dass**
die Beschichtungsschicht (20) gegenüberliegend der Formfläche (18) physikalisch verformt wird, um die strukturierte Beschichtungsfläche (22) zu bilden.

2. Verfahren nach Anspruch 1,
wobei die Beschichtungsschicht (20) durch ein Verfahren physikalisch verformt wird, das aus der Gruppe gewählt ist, die umfasst: Streichen bzw. Bürsten, Walzen, Prägen bzw. Stanzen, Druck, Betupfen und Schwämmen.

3. Verfahren nach Anspruch 1,
umfassend, dass die Beschichtungsschicht (20) teilweise gehärtet wird, bevor die Beschichtungsschicht (20) physikalisch verformt wird.

4. Verfahren nach Anspruch 1,
wobei das Abscheiden der Beschichtungsschicht (20) umfasst, dass ein Acrylpolymerlatex auf der Formfläche (18) aufgetragen wird.

5. Verfahren nach Anspruch 1,
wobei das Abscheiden der Beschichtungsschicht (20) umfasst, dass eine Lösung aus Polyvinylacetat auf der Formfläche (18) aufgetragen wird.

6. Verfahren nach Anspruch 1,
wobei die Form (10) eine offene Werkzeugform ist.

7. Verfahren nach Anspruch 6,
wobei die offene Werkzeugform aus einem Polymermaterial geformt ist.

8. Verfahren nach Anspruch 1,
wobei das Auftragen des Verbundmaterials (14) umfasst, dass eine Gelschicht auf die strukturierte Beschichtung (22) aufgetragen wird und eine faserverstärkte Laminatschicht (16) auf die Gelschicht aufgetragen wird.

9. Verfahren nach Anspruch 8,
umfassend, dass die Gelschicht teilweise gehärtet wird, bevor das Laminat aufgetragen wird.

10. Verfahren nach Anspruch 1,
wobei der Verbund vollständig gehärtet wird, bevor er aus der Form (10) entfernt wird.

11. Verfahren nach Anspruch 1,
wobei der Verbundgegenstand (12) ein Kraftfahrzeugflächengebilde ist.

12. Verfahren nach Anspruch 8,
wobei die Gelschicht auf eine Dicke von 0,5 mm bis 5 mm aufgetragen wird.

13. Verfahren nach Anspruch 8,
wobei die Gelschicht ein Pigment umfasst.

14. Verfahren nach Anspruch 8,
wobei die Laminatschicht Glasfasern und ein ungesättigtes Polyesterharz umfasst.

15. Verfahren nach Anspruch 14,
wobei die Gelschicht ein Polyesterharz umfasst.

16. Verfahren nach Anspruch 8,
wobei das Abscheiden der Beschichtungsschicht (20) umfasst, dass ein Acrylpolymerlatex auf der Formfläche (18) aufgetragen wird.

17. Verfahren nach Anspruch 8,
wobei das Abscheiden der Beschichtungsschicht (20) umfasst, dass eine Lösung aus Polyvinylacetat in Wasser auf die Formfläche (18) gesprüht wird.

18. Verfahren nach Anspruch 8,
wobei der Verbundgegenstand (12) ein Kraftfahrzeugflächengebilde ist.

## Revendications

1. Procédé pour produire un article composite (12) avec une surface texturée (11), le procédé comprenant les étapes consistant à :
fournir un moule (10) ayant une surface de moule (18) ;
déposer une couche de revêtement (20) sur la surface de moule (18), et
appliquer un matériau composite (14) sur une surface de revêtement texturée (22) de telle sorte que le matériau composite (14) adjacent à la surface de revêtement texturée (22) se conforme sensiblement à et adopte la forme de la surface de revêtement texturée (22) pour former la surface texturée (11),
**caractérisé par** l'étape consistant à déformer physiquement la couche de revêtement (20) à l'opposé de la surface de moule (18) pour former la surface de revêtement texturée (22).

2. Procédé selon la revendication 1, dans lequel la couche de revêtement (20) est physiquement déformée par un procédé choisi parmi le groupe comprenant : brossage, galetage, estampage, pressage, tamponnage et application à l'éponge.

3. Procédé selon la revendication 1, comprenant de faire durcir partiellement la couche de revêtement (20) avant de déformer physiquement la couche de revêtement (20).

4. Procédé selon la revendication 1, dans lequel la déposition de la couche de revêtement (20) comprend d'appliquer un latex polymère acrylique sur la surface de moule (18).

5. Procédé selon la revendication 1, dans lequel la déposition de la couche de revêtement (20) comprend d'appliquer une solution d'acétate de polyvinyle sur la surface de moule (18).

6. Procédé selon la revendication 1, dans lequel le moule (10) est un moule d'outillage ouvert.

7. Procédé selon la revendication 6, dans lequel le moule d'outillage ouvert et formé en un matériau polymère.

8. Procédé selon la revendication 1, dans lequel l'application du matériau composite (14) comprend d'appliquer un revêtement sous forme de gel sur le revêtement texturée (22) et d'appliquer une couche de stratifié renforcé par des fibres (16) sur le gel de revêtement.

9. Procédé selon la revendication 8, comprenant de faire partiellement durcir le gel de revêtement avant d'appliquer le stratifié.

10. Procédé selon la revendication 1, dans lequel le composite est complètement durci avant d'être enlevé hors du moule (10).

11. Procédé selon la revendication 1, dans lequel l'article composite (12) est un panneau d'automobile.

12. Procédé selon la revendication 8, dans lequel le gel de revêtement est appliqué à une épaisseur de 0,5 mm à 5 mm.

13. Procédé selon la revendication 8, dans lequel le gel de revêtement comprend un pigment.

14. Procédé selon la revendication 8, dans lequel la couche de stratifié comprend des fibres de verre et une résine polyester insaturée.

15. Procédé selon la revendication 14, dans lequel le gel de revêtement comprend une résine polyester.

16. Procédé selon la revendication 8, dans lequel la déposition de la couche de revêtement (20) comprend d'appliquer un latex polymère acrylique sur la surface de moule (18).

17. Procédé selon la revendication 8, dans lequel la déposition de la couche de revêtement (20) comprend de pulvériser une solution d'acétate de polyvinyle dans de l'eau sur la surface de moule (18).

18. Procédé selon la revendication 8, dans lequel l'article composite (12) est un panneau d'automobile.
